(19) Europäisches Patentamt
European Patent Office
Office européen des brevets

(11) **EP 2 865 094 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
*H02P 27/06* *(2006.01)*      *H02P 27/12* *(2006.01)*
*H02M 7/5387* *(2007.01)*      *H02M 1/00* *(2006.01)*

(21) Anmeldenummer: **13718196.2**

(22) Anmeldetag: **24.04.2013**

(86) Internationale Anmeldenummer:
**PCT/EP2013/058474**

(87) Internationale Veröffentlichungsnummer:
**WO 2013/189635 (27.12.2013 Gazette 2013/52)**

(54) **VERFAHREN UND VORRICHTUNG ZUM ANSTEUERN EINES WECHSELRICHTERS**

METHOD AND DEVICE FOR CONTROLLING AN INVERTER

PROCÉDÉ ET DISPOSITIF DE COMMANDE D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012210650**

(43) Veröffentlichungstag der Anmeldung:
**29.04.2015 Patentblatt 2015/18**

(73) Patentinhaber: **Robert Bosch GmbH**
**70442 Stuttgart (DE)**

(72) Erfinder: **DEFLORIO, Andrea**
**71672 Marbach am Neckar (DE)**

(56) Entgegenhaltungen:
**DE-A1-102008 040 144      DE-T5- 10 393 516**
**US-A- 5 631 819**

## Beschreibung

Die vorliegende Erfindung betrifft ein Verfahren zum Ansteuern des Wechselrichters mittels Raumzeigermodulation, insbesondere zum Ansteuern einer elektrischen Maschine, wobei der Wechselrichter eine Mehrzahl von steuerbaren Schaltern aufweist und der dazu ausgebildet ist, einen mehrphasigen elektrischen Strom bereitzustellen, insbesondere um die elektrische Maschine mehrphasig mit elektrischem Strom zu versorgen, wobei ein Sollstromraumzeiger mit einem Sollphasenwinkel und einer Sollamplitude vorgegeben wird, wobei der Wechselrichter derart angesteuert wird, dass eine Mehrzahl von unterschiedlichen aufeinanderfolgenden Schaltzuständen der Schalter eingerichtet wird, um den elektrischen Strom in Form eines Stromraumzeigers bereitzustellen.

Die vorliegende Erfindung betrifft ferner eine Vorrichtung zum Ansteuern eines Wechselrichters, insbesondere zum Ansteuern einer elektrischen Maschine, wobei der Wechselrichter eine Mehrzahl von steuerbaren Schaltern aufweist, die dazu angeschlossen sind, einen mehrphasigen elektrischen Strom in Abhängigkeit eines Sollstromraumzeigers mit einem Sollphasenwinkel und einer Sollamplitude bereitzustellen, insbesondere um die elektrische Maschine mehrphasig zu bestromen, mit einem Steuergerät, das dazu ausgebildet ist, den Wechselrichter derart anzusteuern, dass der Wechselrichter eine Mehrzahl von aufeinanderfolgenden unterschiedlichen Schaltzuständen der Schalter annimmt, um den elektrischen Strom in Form eines Stromraumzeigers bereitzustellen.

Schließlich betrifft die vorliegende Erfindung einen Kraftfahrzeugantriebsstrang mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Stand der Technik

Auf dem technischen Gebiet der Drehstromverbraucher im Allgemeinen und der elektrischen Drehstrommaschinen im Speziellen sind unterschiedliche Ansteuerungsverfahren bekannt. Dabei wird aktuell üblicherweise das Verfahren der Raumzeigermodulation zur Ansteuerung des Drehstromverbrauchers bevorzugt. Bei diesem Ansteuerungsverfahren wird ein Raumzeiger durch aufeinander folgende Einstellung von acht Grundspannungszeigern gebildet. Um die Strangspannung bereitzustellen, werden die Grundspannungszeiger pulsweitenmoduliert geschaltet, sodass eine entsprechende Ansteuerspannung generiert wird.

Bei den bekannten Ansteuerungsverfahren werden die elektrischen Verbraucher mittels eines Wechselrichters mit Leistungshalbleiterschaltern angesteuert. Die Einstellung der acht aufeinander folgenden Grundspannungszeiger zur Erzeugung des Spannungsraumzeigers wird durch abwechselndes Ein- und Ausschalten bestimmter Leistungshalbleiterschalter der Wechselrichter realisiert. Bei sehr geringen Rotationsgeschwindigkeiten des Raumzeigers beziehungsweise, sofern der Drehstromverbraucher eine elektrische Maschine ist, bei geringen Drehzahlen der angesteuerten elektrischen Maschinen werden einzelne der Leistungshalbleiterschalter sehr häufig bzw. sehr lange geschaltet und somit durch einen sehr lange bzw. sehr häufig fließenden elektrischen Strom thermisch belastet. Daher müssen die Leistungshalbleiterschalter für sehr lange Einschlatzeiten und für sehr große Ströme ausgelegt werden, wodurch der Wechselrichter im Allgemeinen technisch aufwändig wird.

Um einer, insbsondere thermischen, Überbelastung der Leistungshalbleiterschalter zu begegnen wird beispielsweise in der WO 2010/000548A2 vorgeschlagen, einen von zwei spannungsfrei schaltenden Schaltzuständen in bestimmten Pulsweitenmodulationsperioden entfallen zu lassen, um die Schaltverluste der Leistungshalbleiterschalter zu verringern.

Da die, insbesondere thermische, Belastung einzelner Leistungshalbleiterschalter des Wechselrichters abhängig von einem Phasenwinkel des bereitgestellten Stromraumzeigers ist bzw. einzelne der Leistungshalbleiterschalter des Wechselrichters für bestimmte Phasenwinkel des bereitgestellten Stromraumzeigers unterschiedlich belastet werden, wird beispielsweise in der DE 10393516 T1 vorgeschlagen, in bestimmten Winkelbereichen des bereitgestellten Stromraumzeigers einen bestimmten Nullvektor zu verwenden, um die Schaltverluste der Leistungshalbleiterschalter zu reduzieren.

Nachteilig dabei ist es, dass in unterschiedlichen Ansteuerungssituationen und bei unterschiedlichen Rotationsgeschwindigkeiten des Stromraumzeigers einzelne der Leistungshalbleiterschalter stärker belastet werden und somit der Wechselrichter in bestimmten Situationen ungleichmäßig belastet wird und in anderen Situationen, in denen die Belastung der Leistungshalbleiterschalter im Wesentlichen gleichmäßig erfolgt, die Effektivität der Stromausnutzung reduziert ist. Die US 5 631 819 offenbart eine Wechselrichteransteuerschaltung mit den Merkmalen der Oberbegriffe der Ansprüche 1 und 11.

Offenbarung der Erfindung

Erfindungsgemäß wird daher ein Verfahren zum Ansteuern eines Wechselrichters mittels Raumzeigermodulation der eingangs genannten Art bereitgestellt, wobei der Wechselrichter derart angesteuert wird, dass der Stromraumzeiger mit einem Phasenwinkel bereitgestellt wird, der sich von dem Sollphasenwinkel unterscheidet und wobei eine Abweichung des Phasenwinkels von dem Sollphasenwinkel in Abhängigkeit einer Rotationsgeschwindigkeit des Sollstromraumzeigers begrenzt wird.

Ferner wird daher erfindungsgemäß eine Vorrichtung zum Ansteuern eines Wechselrichters der eingangs genannten Art bereitgestellt, wobei das Steuergerät dazu ausgebildet ist, den Wechselrichter derart anzusteuern, dass der Stromraumzeiger mit einem Phasenwinkel bereitgestellt wird, der sich von dem Sollphasenwinkel unterscheidet und eine Abweichung des Phasenwinkels von dem Sollphasenwinkel in Abhängigkeit einer Rotationsgeschwindigkeit des Sollstromraumzeigers begrenzt wird.

Schließlich wird erfindungsgemäß ein Kraftfahrzeugantriebsstrang bereitgestellt mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Vorteile der Erfindung

Dadurch, dass der Stromraumzeiger mit einem Phasenwinkel bereitgestellt wird, der sich von dem Sollphasenwinkel unterscheidet, kann in bestimmten Situationen, in denen einer der steuerbaren Schalter, insbesondre thermisch, überlastet wird oder überlastet zu werden droht, entlastet werden, indem ein Stromraumzeiger mit einem Phasenwinkel eingestellt wird, der einen überlasteten steuerbaren Schalter entlastet und einen anderen steuerbaren Schalter stärker belastet. Sofern die Rotationsgeschwindigkeit des Stromraumzeigers zunimmt und einen bestimmten Wert überschreitet, werden die steuerbaren Schalter durch die hohen Rotationsfrequenzen und die Temperaturträger der steuerbaren Schalter in jedem Falle gleichmäßig belastet, so dass eine Entlastung eines bestimmten Schalters auf Kosten einer Belastung eines anderen Schalters eher nachteilig wäre. Daher kann durch das vorliegende Verfahren in Abhängigkeit der Ansteuersituation und in Abhängigkeit der Rotationsgeschwindigkeit des Stromraumzeigers der Wechselrichter optimal angesteuert werden, um den Wechselrichter in allen Ansteuerungssituationen entsprechend gleichmäßig zu belasten. Somit können die steuerbaren Schalter im Allgemeinen für geringere Belastungswerte ausgelegt werden, wodurch der Wechselrichter im Allgemeinen weniger aufwendig und kostengünstiger gefertigt werden kann. Ferner wird durch die gleichmäßigere Belastung der Schalter die Lebensdauer des Wechselrichters im Allgemeinen verlängert.

Vorzugsweise wird die Abweichung mit zunehmender Rotationsgeschwindigkeit reduziert.

Dadurch kann der Wechselrichter bei sehr geringen Rotationsgeschwindigkeiten des Sollstromraumzeigers große Belastungen einzelner Schalter ausgleichen, wodurch eine kritische Belastungsphase für den Wechselrichter ausgeglichen werden kann.

Es ist weiterhin bevorzugt, wenn die Abweichung in Abhängigkeit von dem Sollphasenwinkel des Stromraumzeigers eingestellt wird.

Dadurch kann für bestimmte kritische Sollphasenwinkel individuell ein optimaler Stromraumzeiger eingestellt werden, der besondere Belastungszustände einzelner steuerbarer Schalter ausgleichen kann.

Es ist weiterhin bevorzugt, wenn die Abweichung innerhalb eines Abweichungsbereiches variiert wird und wobei der Abweichungsbereich mit zunehmender Rotationsgeschwindigkeit des Sollstromraumzeigers reduziert wird.

Dadurch kann die durch die Abweichung insgesamt stärkere Gesamtbelastung der elektrischen Maschine und des Wechselrichters angepasst werden an die Notwendigkeit einzelne steuerbare Schalter zu entlasten.

Es ist weiterhin allgemein bevorzugt, wenn unterhalb einer vordefinierten Rotationsgeschwindigkeit der Phasenwinkel in Abhängigkeit eines vordefinierten Belastungssollwerts der Schalter eingestellt wird.

Dadurch kann bei kritischen Rotationsgeschwindigkeiten des Stromraumzeigers eine bestimmte Belastungsverteilung des Wechselrichters eingestellt werden.

Dabei ist es besonders bevorzugt, wenn der Phasenwinkel und eine Amplitude des Stromraumzeigers derart eingestellt werden, dass eine Leistungsabgabe identisch ist mit einer Leistungsabgabe entsprechend dem Sollphasenwinkel und der Sollamplitude des Sollstromraumzeigers.

Dadurch kann die Abweichung des Phasenwinkels eingestellt werden, ohne dass die Ansteuerung der angesteuerten Last beeinträchtigt wird.

Es ist weiterhin bevorzugt, wenn die maximale Abweichung des Stromraumzeigers von dem Sollstromraumzeiger 30° Grad beträgt.

Dadurch kann die Gesamtbelastung des Wechselrichters begrenzt werden, da die Amplitude des Stromraumzeigers mit größerer Abweichung des Phasenwinkels von dem Sollphasenwinkels zunimmt und andere steuerbare Schalter des Wechselrichters übermäßig belastet werden.

Es ist weiterhin bevorzugt, wenn der Abweichungsbereich zwischen einer ersten vordefinierten Rotationsgeschwindigkeit und einer zweiten vordefinierten Rotationsgeschwindigkeit des Sollstromraumzeigers linear reduziert wird.

Dadurch kann in einer Übergangsphase zwischen unterschiedlichen Ansteuerungsverfahren mit regelungstechnischen einfachen Mitteln variiert werden, wobei Synergien beider Ansteuerungsverfahren genutzt werden können.

Es ist weiterhin bevorzugt, wenn mittels des Wechselrichters eine elektrische Maschine angesteuert wird und der Sollstromzeiger in Abhängigkeit des Rotorwinkels der elektrischen Maschine bestimmt wird.

Dadurch kann der Sollstromraumzeiger mit regelungstechnisch geringem Aufwand bestimmt werden.

Dabei ist es besonders bevorzugt, wenn der Phasenwinkel und die Amplitude des Stromraumzeigers unterhalb einer vordefinierten Rotationsgeschwindigkeit derart bestimmt wird, dass ein von der elektrischen Maschine abgebebenes Drehmoment identisch ist mit dem Drehmoment, das mittels des Sollstromraumzeigers abgegeben wird.

Dadurch kann die elektrische Maschine auch bei einem von dem Sollphasenwinkel abweichenden Phasenwinkel entsprechend eines vordefinierten Sollwertes angesteuert werden, wobei die Variation des Phasenwinkels die Ansteuerung der elektrischen Maschine nicht beeinträchtigt.

Im Ergebnis kann durch die vorliegende Erfindung die angesteuerte Last in unterschiedlichen Ansteuerungssituationen insbesondere bei unterschiedlichen Rotationsfrequenzen des Stromraumzeigers optimal angesteuert werden, so dass der Wechselrichter gleichmäßig belastet wird und die Stromausnutzung durch die angesteuerte Last optimal ist.

Es versteht sich, dass Merkmale, Eigenschaften und Vorteile des erfindungsgemäßen Verfahrens auch entsprechend auf die erfindungsgemäße Vorrichtung zutreffen bzw. anwendbar sind.

Kurze Beschreibung der Zeichnungen

Figur 1 zeigt in schematischer Form einen Wechselrichter zum Ansteuern eines elektrischen Verbrauchers;

Figur 2 zeigt ein komplexes Zeigerdiagramm zur Erläuterung des Raumzeigermodulationsverfahrens zum Ansteuern des Wechselrichters eines elektrischen Verbrauchers;

Figur 3 zeigt in schematischer Form einen Verlauf von drei Strangspannungen zum Einstellen unterschiedlicher Spannungsraumzeiger;

Figur 4 zeigt in schematischer Form einen Ablauf zum Bestimmen eines Belastungssollwertes der Schalter bzw. der Freilaufdioden des Wechselrichters;

Figur 5 zeigt in schematischer Form einen detaillierten Ablauf zum Bestimmen eines Belastungssollwertes auf der Grundlage von Temperaturmessungen oder -schätzungen;

Figur 6 zeigt in schematischer Form ein komplexes Zeigerdiagramm zum Einstellen eines Stromraumzeigers;

Figur 7 zeigt ein komplexes Zeigerdiagramm zum Einstellen eines Alternativstromraumzeigers;

Figur 8 zeigt ein komplexes Zeigerdiagramm zum Einstellen eines Stromraumzeigers mit einem Phasenwinkel von Null Grad;

Fig. 9 zeigt die Abweichung eines Phasenwinkels des Stromraumzeigers von dem Sollphasenwinkel in Abhängigkeit des Sollstromraumzeigers; und

Fig. 10 zeigt einen Verlauf der maximalen Abweichung des Phasenwinkels von dem Sollphasenwinkels in Abhängigkeit der Rotationsfrequenz des Sollstromraumzeigers.

Ausführungsformen der Erfindung

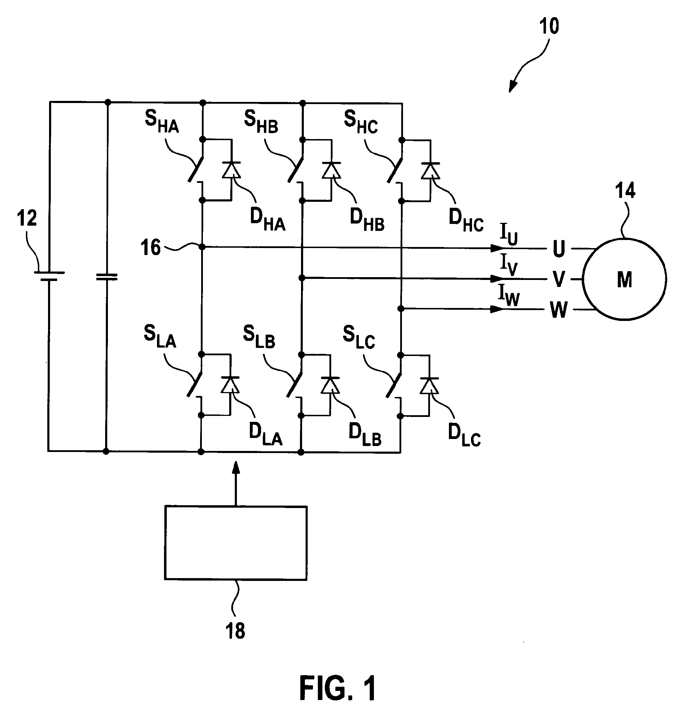

In Figur 1 ist ein Wechselrichter zum Ansteuern eines elektrischen Verbrauchers, insbesondere einer elektrischen Maschine schematisch dargestellt und allgemein mit 10 bezeichnet.

Der Wechselrichter 10 ist mit einer Gleichspannungsquelle 12 verbunden und dient dazu, den elektrischen Verbraucher 14, der in diesem Fall als elektrische Maschine 14 ausgebildet ist, dreiphasig zu bestromen. Der Wechselrichter weist drei Halbbrücken auf, die parallel zu der Gleichspannungsquelle 12 geschaltet sind und jeweils zwei steuerbare Schalter S aufweisen. Zwischen den Schaltern S ist jeweils ein Halbbrückenabgriff 16 gebildet, die jeweils mit einem Phasenleiter der Phasen U, V, W der elektrischen Maschine 14 verbunden sind.

Parallel zu den Schaltern S ist jeweils eine Freilaufdiode D geschaltet, die einen Stromfluss in entgegengesetzter Richtung ermöglicht.

In Figur 1 sind die Schalter S entsprechend der Phase U, V, W, die sie bereitstellen und entsprechend der Zuordnung zu einem hohen Potenzial der Gleichspannungsquelle 12 oder einem niedrigen Potenzial der Gleichspannungsquelle 12 mit SHA, SLA, SHB, SLB, SHC, SLC bezeichnet. Entsprechend sind die Freilaufdioden bezeichnet mit DHA, DLA, DHB, DLB, DHC, DLC.

Durch wechselndes Öffnen und Schließen der Schalter S wird zwischen den Phasenleitern U, V, W jeweils eine Ansteuerspannung angelegt, sodass sich entsprechend jeweils ein Phasenstrom IU, IV, IW einstellt, der die elektrische Maschine 14 antreibt. Der Wechselrichter 10 ist vorzugsweise mittels Halbleiterschaltern ausgebildet. Die Schalter des Wechselrichters werden mittels einer schematisch dargestellten Steuereinheit 18 wechselnd geöffnet und geschlossen, um die Phasenspannungen mit einem bestimmten Verlauf bereitzustellen, und einen Spannungsraumzeiger bereitzustellen und die elektrische Maschine 14 entsprechend mit den Phasenströmen IU, IV, IW zu bestromen. Dabei wird der Spannungszeiger durch den Wechselrichter 10 bereitgestellt, woraufhin sich der Stromraumzeiger in Abhängigkeit der angesteuerten Last entsprechend einstellt.

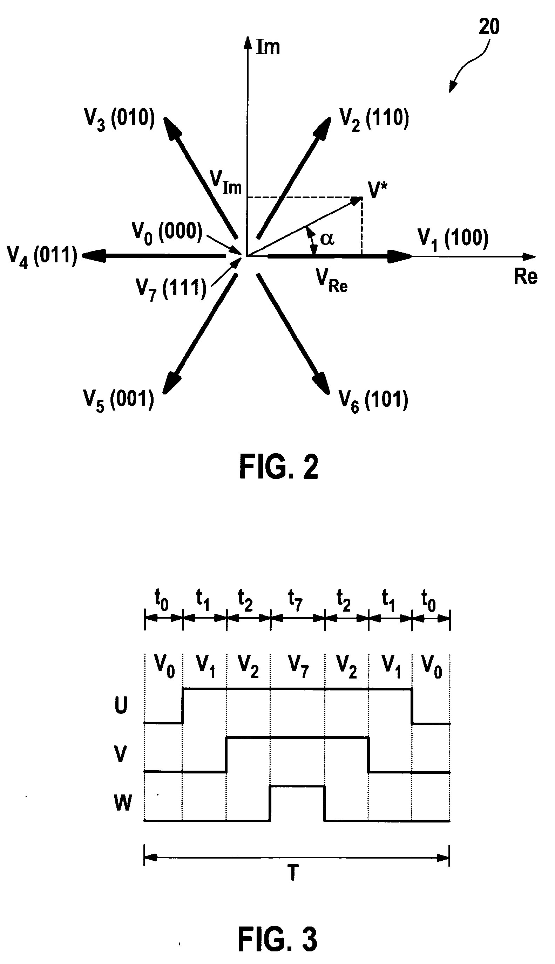

In Figur 2 ist ein komplexes Zeigerdiagramm zur Erläuterung der Raumzeigermodulation zum Ansteuern des Drehstromverbrauchers 14 beziehungsweise der elektrischen Maschine 14 dargestellt und allgemein mit 20 bezeichnet.

In dem Zeigerdiagramm 20 ist ein Spannungszeiger V* mit einem Ansteuerungswinkel Alpha der elektrischen Maschine 14 dargestellt. In dem Zeigerdiagramm 20 sind ferner sechs Grundspannungszeiger V1, V2, V3, V4, V5, V6 dargestellt, die sich ergeben, wenn einzelne oder zwei der Schalter S des Wechselrichters 10 geschlossen werden und die elektrische Maschine entsprechend angesteuert wird. Um den Spannungszeiger V* mit maximaler Länge einzustellen, der in diesem Beispiel den Ansteuerwinkel Alpha zwischen den Grundspannungszeigern V1 und V2 aufweist, wird dieser durch abwechselndes Ansteuern des Wechselrichters 10 entsprechend dem Grundspannungszeiger V1 und dem Grundspannungszeiger V2 realisiert. Die beiden Grundspannungszeiger V1, V2 werden abwechselnd eingestellt mit einer vordefinierten Schaltfrequenz, sodass sich bei gleicher Einschaltdauer der Grundspannungszeiger V1, V2 der Spannungszeiger V* mit einem Phasenwinkel von 30° ergibt. Sofern ein Spannungszeiger V* mit einem größeren Ansteuerungswinkel Alpha eingestellt werden muss, wird entsprechend die Einschaltdauer des Grundspannungszeigers V2 verlängert und die Einschaltdauer des Grundspannungszeigers V1 verkürzt. Somit lässt sich durch getaktetes Ansteuern der Schalter S des Wechselrichters 10 der Spannungsraumzeiger V* mit einem beliebigen Ansteuerwinkel Alpha realisieren.

Sofern der Spannungszeiger V*, wie in dem in Figur 2 dargestellten Fall mit einem geringeren Betrag (geringere Länge) als die Grundspannungsraumzeiger V1, V2 eingestellt werden soll, wird entsprechend ein Nullspannungszeiger V0, V7 eingestellt, bei dem die Schalter SHA, SHB, SHC auf der oberen Seite bzw. SLA, SLB, SLC auf der unteren Seite des Wechselrichters 10 geöffnet sind. Die jeweils anderen der Schalter S sind entsprechend geschlossen. Entsprechend kann der Spannungszeiger V* durch eine Kombination der Grundspannungsraumzeiger V1 und V2 und einem der Nullspannungszeiger V0, V7 realisiert werden.

In Abhängigkeit des Spannungsraumzeigers V* stellt sich ein Stromraumzeiger I* ein. Der Stromraumzeiger I* weist eine Amplitude und einen Phasenwinkel auf, die sich in Abhängigkeit des angesteuerten elektrischen Verbrauchers 14 einstellen. Der Phasenwinkel des Stromraumzeigers I* kann phasengleich mit dem Phasenwinkel $\alpha$ des Spannungsraumzeigers V* sein oder eine Phasenverschiebung aufweisen.

Zur Bestromung des elektrischen Verbrauchers 14 beziehungsweise der elektrischen Maschine 14 wird der Spannungsraumzeiger V* bereitgestellt, indem die unterschiedlichen Grundspannungsraumzeiger V1-V6 und die Nullspannungszeiger V0, V7 in einer schnellen Abfolge hintereinander eingestellt werden. Dadurch werden die unterschiedlichen Schalter S und die unterschiedlichen Freilaufdioden D des Wechselrichters 10 bei einem entsprechend schnell rotierenden Spannungsraumzeigers V* gleichmäßig belastet, insbesondere phasig gleichmäßiger belastet. Sofern die Rotationsfrequenz des Spannungsraumzeigers V* sehr gering oder null ist, zum Beispiel bei geringen Drehzahlen der elektrischen Maschine 10, werden die entsprechenden Schalter S und die Freilaufdioden D des Wechselrichters 10 einer Phase U, V, W über einen langen Zeitraum belastet, sodass eine Überlastung der entsprechenden Schalter S und der Freilaufdioden D auftreten kann und die Schalter S und die Freilaufdioden D des Wechselrichters 10 im Allgemeinen ungleichmäßig, insbesondere phasig ungleichmäßig belastet werden. Um bei eine Überlastung einzelner der Schalter S und Freilaufdioden D zu verhindern, müssen Maßnahmen ergriffen werden, um die Belastung auf unterschiedliche der Schalter S und der Freilaufdioden D zu verteilen.

In Figur 3 sind Verläufe der Phasenspannungen der drei Phasen U, V, W innerhalb einer pulsweiten Modulationsperiode T dargestellt, um die Grundspannungsraumzeiger V0, V1, V2, V7 nacheinander einzustellen. Innerhalb der pulsweiten Modulationsperiode T kann eine Einschaltdauer t0, t1, t2, t7 der einzelnen Grundspannungsraumzeiger V0, V1, V2, V7 variiert werden, um den Spannungsraumzeiger V* präzise einstellen zu können.

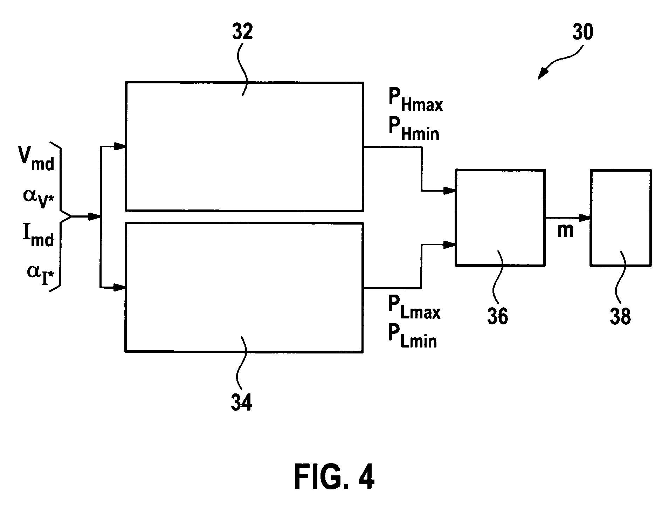

In Figur 4 ist die Bestimmung eines Belastungssollwertes m prinzipiell dargestellt und allgemein mit 30 bezeichnet. Mittels des Belastungssollwertes m wird grundsätzlich das Ziel verfolgt, die Schalter SHA, SHB, SHC, die einem hohen Spannungspotential der Spannungsquelle 12 zugeordnet sind und die Schalter SLA, SLB, SLC, die einem niedrigen Spannungspotential der Spannungsquelle 12 zugeordnet sind, gleich oder in möglichst ähnlicher Weise zu belasten. Dabei werden im Folgenden die Schalter SHA, SHB, SHC, die dem hohen Spannungspotential der Spannungsquelle 12 zugeordnet sind als obere Schalter SH bezeichnet und die Schalter SLA, SLB, SLC, die dem niedrigen Spannungspotential der Spannungsquelle 12 zugeordnet sind, als untere Schalter SL bezeichnet.

Als Eingangsgröße dienen der Betrag V des Spannungsraumzeigers V*, der Phasenwinkel Atpha_V des Spannungsraumzeigers V*, der Betrag I des Stromraumzeigers I* und der Phasenwinkel Alpha_I des Stromraumzeigers I*.

Zunächst wird einer der oberen Schalter SH bzw. eine der oberen Freilaufdioden DH ausgewählt, der bzw. die die maximalen Verluste der oberen Seite für den einzustellenden Spannungsraumzeiger V* aufweist. Für diesen Schalter SH bzw. diese Freilaufdiode DH werden die maximal möglichen Verluste P_Hmax für den einzustellenden Spannungsraumzeiger V* theoretisch bestimmt für den Fall, dass lediglich V7 als Nullspannungszeiger verwendet wird. Ferner werden die minimal möglichen Verluste P_Hmin dieses Schalters SH bzw. dieser Freilaufdiode DH für den einzustellenden Spannungsraumzeiger V* theoretisch bestimmt für den Fall, dass lediglich V0 als Nullspannungszeiger verwendet wird, wie es bei 32 gezeigt ist. Bei 34 wird entsprechend der untere Schalter SL bzw. die untere Freilaufdiode DL ausgewählt, der die maximalen Verluste der unteren Schalter SL bzw. der unteren Freilaufdioden DL für den einzustellenden Spannungsraumzeiger V* aufweist. Für diesen Schalter SL bzw. diese Freilaufdiode DL werden dann die maximal möglichen Verluste P_Lmax und die minimal möglichen Verluste P_Lmin für den einzustellenden Spannungsraumzeiger V* bestimmt für den Fall, dass lediglich V0 bzw. V7 als Nullspannungszeiger verwendet wird. Aus diesen Verlustwerten wird bei 36 ein neuer Belastungswert m berechnet und zwar mit der Formel:

$$m = \frac{P_{L\max} - P_{H\min}}{P_{H\max} - P_{H\min} + P_{L\max} - P_{L\min}}$$

Der so bestimmte Belastungswert m verteilt die thermische Belastung des Wechselrichters 10 auf die obere und der untere Seite derart, dass die Verluste auf der oberen Seite identisch mit den Verlusten der unteren Seite sind. Bei 38 werden die Einschaltzeiten t0 - t7 berechnet, um den ausgewählten Belastungswert m einzustellen und die Schalter S und die Freilaufdioden D entsprechend gleichmäßiger zu belasten.

Da die Freilaufdioden D und die Schalter S unterschiedliche Belastungsgrenzen aufweisen aufweisen, müssen die Verluste $P_D$, $P_S$ der Freilaufdioden D und der Schalter S aneinander angepasst bzw. faktorisiert werden, um miteinander verglichen werden zu können. Daher wird für die Freilaufdioden D eine Vergleichsverlustleistung $P_{DV}$ bestimmt, und zwar mit der Formel:

$$P_{DV} = c* \, P_D$$

Wobei $P_{DV}$ die Vergleichsverlustleistung der Freilaufdioden, $P_D$ die Freilaufdiodenverluste, und der Faktor c eine Konstante sind. In einer besonderen Ausführungsform kann der Faktor c auch eine Funktion der Verlustleisung $P_D$ der Freilaufdioden D sein.

Ferner wird deutlich, dass die Verluste $P_D$, $P_S$ der Schalter S bzw. der Freilaufdioden D ausschließlich eine Funktion des Betrages V des Spannungsraumzeigers V*, des Phasenwinkels Alpha_V, des Betrages I des Stromraumzeigers I* und des Phasenwinkels Alpha_I sind.

In einer alternativen Ausführungsform des Verfahrens 30 werden anstatt der Verlustleistungen P der elektrische Strom I in dem jeweiligen Bauelement S, D und/oder das Quadrat des elektrischen Stroms $I^2$ in dem jeweiligen Bauelement S, D verwendet, um den Belastungssollwert m zu bestimmen.

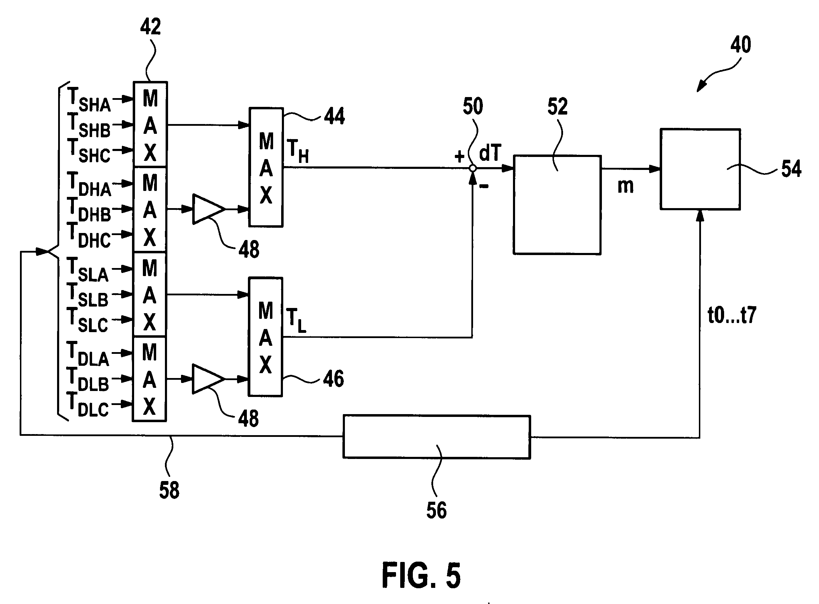

In Figur 5 ist ein Verfahren dargestellt, um den Belastungswert m auf der Grundlage einer geschätzten oder gemessenen Temperatur $T_D$, $T_s$ der Schalter S und/oder der Freilaufdioden D zu bestimmen und einen neuen Belastungssollwert m zu ermitteln. In Figur 5 ist das Verfahren allgemein mit 40 bezeichnet.

Bei dem Verfahren 40 erfolgt im Betrieb die Bestimmung des Belastungssollwertes m in Abhängigkeit die Temperaturen der Schalter S bzw. der Freilaufdioden D. Als Eingangsgröße dienen allgemein die Temperatu-ren $T_D$, $T_s$ der Schalter S und der Freilaufdioden D. Bei 42 wird über die Temperaturen $T_D$, $T_s$ der am stärksten belastete obere Schalter SH, die am stärksten belastete obere Freilaufdiode DH, der am stärksten belastete untere Schalter SL und die am stärksten belastete untere Freilaufdiode DL ermittelt. Mit anderen Worten wird das jeweilige Bauelement ermittelt, das die höchste Temperatur aufweist. Aus diesen Temperaturen wird bei 44 und 46 die maximale Temperatur T_H der oberen Schalter und/oder der oberen Freilaufdioden bzw. aus den Verlusten der unteren Seite die maximale Temperatur T_L der unteren Seite ermittelt. Dabei wird die Temperatur $T_D$ der Freilaufdioden D faktorisiert um die Temperaturen der Schalter und der Freilaufdioden D vergleichen zu können, wie es bei 48 gezeigt ist. Um die Temperaturen der Schalter S und der Freilaufdioden D vergleichen zu können, wird eine Vergleichstemperatur der Freilaufdioden bestimmt mit der Formel:

$$T_{DV} = c*T_D$$

Wobei $T_{DV}$ die Vergleichstemperatur, $T_D$ die Temperatur der Freilaufdioden D und der Faktor c eine Konstante sind. In einer besonderen Ausführungsform kann der Faktor c auch eine Funktion der Verlustleisung $P_D$ der Freilaufdioden D sein. An einem Summationspunkt 50 wird die Differenz dT zwischen der maximalen Temperatur T_H der oberen Seite und der maximalen Temperatur T_L der unteren Seite ermittelt. Bei 52 wird in Abhängigkeit der Temperaturdifferenz dT ein geänderter Belastungssollwert m bestimmt, um die Temperaturdifferenz dT entsprechend auszugleichen. Sofern die Temperaturdifferenz dT > 0 ist, wird der Belastungssollwert m, Ism reduziert und sofern die Temperaturdifferenz dT < 0 ist, wird der Belastungssollwert m, Ism erhöht. In Abhängigkeit des so bestimmten Belastungssollwertes m, Ism werden bei 54 neue Einschaltdauern t0 - t7 für die folgende Pulsweitenmodulationsperiode T bestimmt. In Abhängigkeit der neuen Pulsweitenmodulationsperiode T werden geänderte Temperaturen $T_D$, $T_s$ der Schal-ter S und der Freilaufdioden D ermittelt, wie es bei 56 gezeigt ist und als neue Eingangsgrößen für das Verfahren 14 bereitgestellt, wie es durch die Rückführung 58 angedeutet ist. Dadurch kann auf der Grundlage der gemessenen oder geschätzten Temperatur der Schalter S und/oder der Freilaufdioden D für jede Pulsweitenmodulationsperiode T ein neuer Belastungssollwert m bestimmt werden, um die entsprechenden Schalter S und Freilaufdioden D gemäß dem neuen Belastungssollwert m, Ism gleichmäßiger zu belasten. Durch den Vergleich der Temperatur der Bauelemente der oberen Seite und der unteren Seite und durch die Anpassung des Belastungswertes m kann somit eine gleichmäßigere Belastung der Bauelemente der oberen Seite relativ zu den Bauelementen der unteren Seite erreicht werden.

In einer alternativen Ausführungsform des Verfahrens 40 werden zur Bestimmung des Belastungssollwertes m, Ism anstatt der Temperaturen der Bauelemente S, D Verlustwerte verwendet, die durch Integration der Verlustleistung des jeweiligen Bauelementes S, D oder durch Integration des elektrischen Stroms I in dem jeweiligen Bauelement S, D und/oder durch Integration des Quadrates des elektrischen Stroms $I^2$ in dem jeweiligen Bauelement S, D über einen vordefinierten Zeitraum ermittelt bzw. bestimmt werden.

In einer weiteren Ausführungsform des Verfahrens 40 werden zur Bestimmung des Belastungssollwertes m, Ism anstatt der Temperaturen der Bauelemente S, D die elektrischen Verluste P oder der elektrische Strom I in dem jeweiligen Bauelement S, D und/oder das Quadrat des elektrischen Strom $I^2$ in dem jeweiligen Bauelement S, D verwendet, die jeweils mittels eines Tiefpassfilter gefiltert werden.

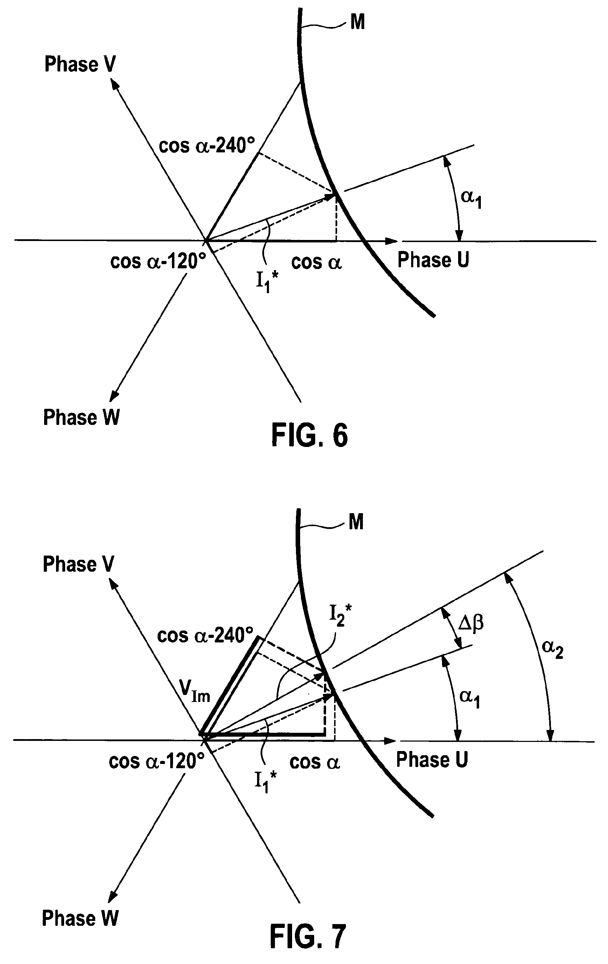

In Figur 6 ist ein komplexes Zeigerdiagramm des Stromraumzeigers I1* schematisch dargestellt. Der Stromraumzeiger I1* weist einen Betrag 11 und einen Phasenwinkel alpha1 auf. Sofern der Wechselrichter 10, der den Stromraumzeiger I1* einstellt, zum Ansteuern der elektrischen Maschine 14 eingesetzt wird, erzeugt die elektrische Maschine 14 ein Drehmoment M. In dem komplexen Zeigerdiagramm aus Figur 6 sind die einzelnen Phasen U, V, W mit einem Winkel von 120 Grad zueinander dargestellt. Eine Projektion des Stromraumzeigers I1* auf die entsprechenden Phasen U, V, W entspricht dabei dem Strom, der in den zugeordneten Schalter S eingestellt wird. Durch diese Projektion, die durch die gestrichelten Linien angedeutet ist, kann somit die Belastung der einzelnen Schalter S bzw. Freilaufdioden D direkt abgelesen werden. In dem dargestellten Beispiel aus Figur 6 wird somit der Schalter SHA durch die Phase U am stärksten belastet, wobei der Schalter SHC der Phase W weniger belastet wird, als der Schalter SHA und der Schalter SHB der Phase V sehr gering belastet wird.

In Figur 6 ist das bereitgestellte Drehmoment M der angeschlossenen elektrischen Maschine 14 als Kurve dargestellt, die gleichzeitig eine Kurve konstanten Drehmomentes M darstellt. Das von der elektrischen Maschine 14 abgegebene Drehmoment M ist eine Funktion eines Winkels Theta, um den der Stromzeiger I* dem elektrischen Rotorwinkel der elektrischen Maschine 14 vorauseilt und der Amplitude I des Stromraumzeigers I*: M = f(Theta, I). Daraus wird ersichtlich, dass das Drehmoment M, das von der elektrischen Maschine 14 abgegeben wird, konstant ist, sofern der Stromraumzeiger I1* der in Figur 6 dargestellten Linie konstanten Drehmoments M folgt.

Der Stromraumzeiger I1* wird so eingestellt, dass er einem elektrischen Rotorwinkel der elektrischen Maschine 14 vorauseilt, um mittels der elektrischen Maschine 14 das Drehmoment M bereitzustellen. Der Stromraumzeiger I1* eilt der elektrischen Rotorposition der elektrischen Maschine 14 um einen Winkel Theta voraus. Dies wird deutlich durch die Formel:

$$\text{alpha\_I} = \text{alpha\_R} + \text{Theta},$$

wobei Alpha_I der Phasenwinkel des Stromraumzeigers I1*, Alpha_R der elektrische Winkel des Rotors der elektrischen Maschine 14 und Theta der Differenzwinkel ist.

Der Differenzwinkel Theta liegt üblicherweise zwischen 90 Grad und 180 Grad im motorischen Betrieb. Der Stromraumzeiger I1* wird so eingestellt, dass der Wechselrichter 10 und die elektrische Maschine 14 für den elektrischen Rotorwinkel alpha_R einen optimalen Wirkungsgrad haben.

Eine Variation des Phasenwinkels alpha_I des Stromraumzeigers ist in einem komplexen Zeigerdiagramm in Figur 7 schematisch dargestellt.

In dem in Figur 7 dargestellten komplexen Zeigerdiagramm ist der Sollstromraumzeiger I1* mit dem Phasenwinkel alpha1 und dem Betrag 11 dargestellt und der Stromraumzeiger I2* mit dem Phasenwinkel alpha2 und dem Betrag 12. Der Sollstromraumzeiger I1* ist dabei der Stromraumzeiger, bei dem der Wechselrichter 10 und die elektrische Maschine 14 einen optimalen Wirkungsgrad aufweisen. Beide Stromraumzeiger I1*, I2* geben das gleiche Drehmoment M ab, da sie auf der Linie gleichen Drehmoments M verlaufen. Der Sollstromraumzeiger I1* ist identisch mit dem Stromzeiger I1* aus Figur 6. Der Stromraumzeiger I2* weist einen Phasenwinkel Alpha2 auf, der größer ist, als der Phasenwinkel alpha1 des Sollstromraumzeigers I1*. Die Differenz zwischen den Phasenwinkeln alpha1 und alpha2 ist in Figur 7 als delta_beta bezeichnet. delta_beta kann in Abhängigkeit des Phasenwinkels alpha 1 unterschiedlich groß sein und schwanken maximal zwischen +30° und -30°. Durch die in Figur 7 dargestellte Projektion des Stromraumzeigers I2* auf die entsprechenden Phasenachsen der Phasen U, V, W wird deutlich, dass der Strom in der Phase U also in dem Schalter SHA gegenüber I1* reduziert ist und der Strom in der Phase W also dem Schalter SHC und der Freilaufdiode DLC erhöht ist. Insgesamt ist die Strombelastung durch den größeren Betrag des Stromraumzeigers I2* größer als bei dem Sollstromraumzeiger I1*, jedoch kann durch diese Maßnahme wie aus Figur 7 ersichtlich ist, die Belastung des am stärksten belasteten Schalters SHA und der Freilaufdiode DLA reduziert werden. Dadurch können Spitzenbelastungen der am stärksten belasteten Schalter S und auch der am stärksten belasteten Freilaufdioden D reduziert werden und die Belastung auf andere Schalter S oder Freilaufdioden D verteilt werden. Dadurch kann der Wechselrichter 10 phasig gleichmäßiger belastet werden. Da der Stromzeiger I2* der Linie gleichen Drehmoments M folgt, wird ein identisches Drehmoment M von der elektrischen Maschine 14 bereitgestellt, sodass diese Maßnahme für den Nutzer der elektrischen Maschine 14 keine Einschränkung darstellt und beispielsweise kein Stottern oder ein Einbruch des Drehmoments M auftritt. Durch die Einstellung des Stromraumzeigers I2*, der von dem Sollstromraumzeiger I1* abweicht, können die Verluste in den einzelnen Phasen U, V, W verteilt werden und somit eine Überlastung einzelner Bauteile einzelner Phasen vermieden werden. Mit anderen Worten kann somit eine gleichmäßigere Belastung der Phasen U, V, W erreicht werden.

Im Ergebnis kann somit durch das Bereitstellen eines alternativen Stromraumzeigers I2* mit einem von dem Sollphasenwinkel alpha1 abweichenden Phasenwinkel alpha2 eine Reduktion des am meisten belasteten Schalters SHA und der Freilaufdiode DLA bzw. der am stärksten belasteten Phase U erzielt werden und somit der Wechselrichter 10 im Allgemeinen gleichmäßiger belastet werden.

Falls die Freilaufdioden D stark belastbar sind kann delta_beta auch mit einem negativen Wert eingestellt werden, um einzelne der Schalter S zu entlasten. In der in Figur 7 dargestellten Ansteuerungssituation wird zunächst durch die Auswahl des Nullspannungszeigers V0 der Schalter SHA entlastet und somit die Freilaufdiode DLA stärker belastet. Dadurch werden auch die Schalter SLB, SLB stärker belastet. Für den Phasenwinkel alpha_1 wird dann die Freilaufdiode DLA am stärksten, der Schalter SLC weniger stark und der Schalter SLB sehr gering belastet. In dieser Situation kann durch einen Phasenwinkel alpha_2, der kleiner ist als alpha_1, also mit einem negativen Abweichungswinkel delta_beta, die Freilaufdiode DLA stärker belastet werden, wodurch allerdings der Schalter SLC entlastet und der Schalter SLB stärker belastet wird. Somit kann die Belastung der Schalter SLB und SLC gleichmäßiger verteilt werden. Dies erfolgt allerdings auf Kosten einer stärkeren Belastung der Freilaufdiode DLA.

Mit anderen Worten wird zunächst die Belastung von einem oberen Schalter SH auf eine untere Freilaufdiode DL verlagert und zwar durch Wahl einer geeigneten zeitlichen Verteilung der Nullspannungszeiger V0, V7 und dann wird die Belastung bei dem Nullspannungszeiger V0, V7 durch Einstellen des Abweichungswinkels delta_beta auf die Phasen U,V,W verteilt. So kann im Allgemeinen die Belastung der Schalter S und der Freilaufdioden D gleichmäßiger eingestellt werden.

Vorzugsweise wird das Verfahren 40 aus Fig. 5 mit dem Einstellen des alternativen Stromraumzeigers I2* aus Fig. 7 kombiniert. Dabei wird beispielsweise vor Ansteuerung des Wechselrichters 10 also etwa in dem Steuergerät 18 auf der Grundlage des Sollstromraumzeigers I1* nach dem Verfahren 30 ein optimierter Belastungssollwert m und gleichzeitig auch ein optimierter Stromraumzeiger I2* bestimmt. Diese Werte werden in einem Kennfeld abgespeichert und die elektrische Maschine 14 wird anhand der Werte des Kennfeldes angesteuert. Mit anderen Worten werden der Belastungssollwert m und der Stromraumzeiger I2* offline bestimmt und die elektrische Maschine entsprechend angesteuert.

Alternativ dazu kann der optimierte Stromraumzeiger I2* aus dem Kennfeld entnommen werden und der Belastungssollwert m im Betrieb der elektrischen Maschine 14 nach dem Verfahren 30 oder 40 auf der Grundlage von Messwerten oder Schätzwerten bestimmt werden und entsprechend kontinuierlich optimiert werden. Mit anderen Worten wird der Belastungssollwert m online bestimmt und angepasst.

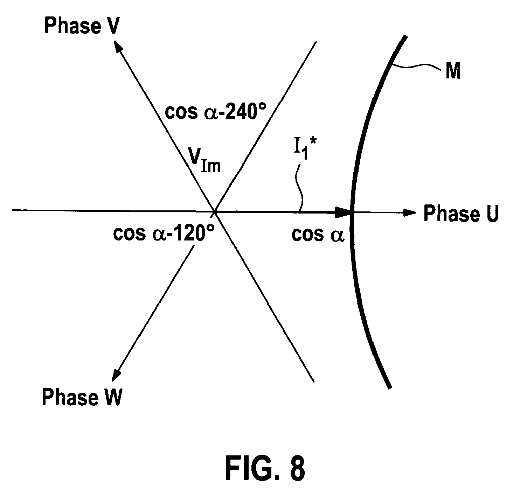

In Figur 8 ist ein komplexes Zeigerdiagramm entsprechend der Figuren 6 und 7 schematisch dargestellt für einen Sollstromraumzeiger I1* von Null Grad. In Figur 8 ist ferner die Linie gleichen Drehmoments M dargestellt. Die Linie gleichen Drehmoments M weist eine derartige Krümmung auf, dass eine Entlastung der Phase U bzw. eine Entlastung des entsprechenden Schalters SHA durch Bereitstellen eines Stromraumzeigers I2* mit einem abweichenden Phasenwinkel nicht möglich ist. Im Gegenteil würde durch einen größeren oder kleineren Phasenwinkel alpha2 die Belastung des Schalters SHA gleich bleiben oder sogar zunehmen und ferner ein weiterer Schalter der Phase W oder der Phase V zusätzlich belastet werden. Entsprechende Verläufe der Linie gleichen Drehmoments ergeben sich für Phasenwinkel entsprechend der Achsen der Phasen U, V, W, also für die Winkel 0 Grad, 60 Grad, 120 Grad, 180 Grad, 240 Grad, 300 Grad usw. Für diese Phasenwinkel alpha1 ist eine Ansteuerung mittels eines abweichenden Phasenwinkels alpha2 nicht sinnvoll. Besonders sinnvoll ist eine Ansteuerung mittels des abweichenden Phasenwinkels alpha2 für Phasenwinkel alpha1 im Bereich von 30 Grad, 90 Grad, 150 Grad, usw.

Um den regelungstechnischen Aufwand zu reduzieren, können für bestimmte Sollphasenwinkel alpha1 Daten der Stromraumzeiger I2* in einem Kennfeld abgelegt werden. In dem Kennfeld kann auch berücksichtigt werden, dass für bestimmte Frequenzen des Stromsollraumzeigers I1* die Phasenwinkel des Stromraumzeigers I1* und die Phasenwinkel des Spannungsraumzeigers V1* voneinander abweichen können.

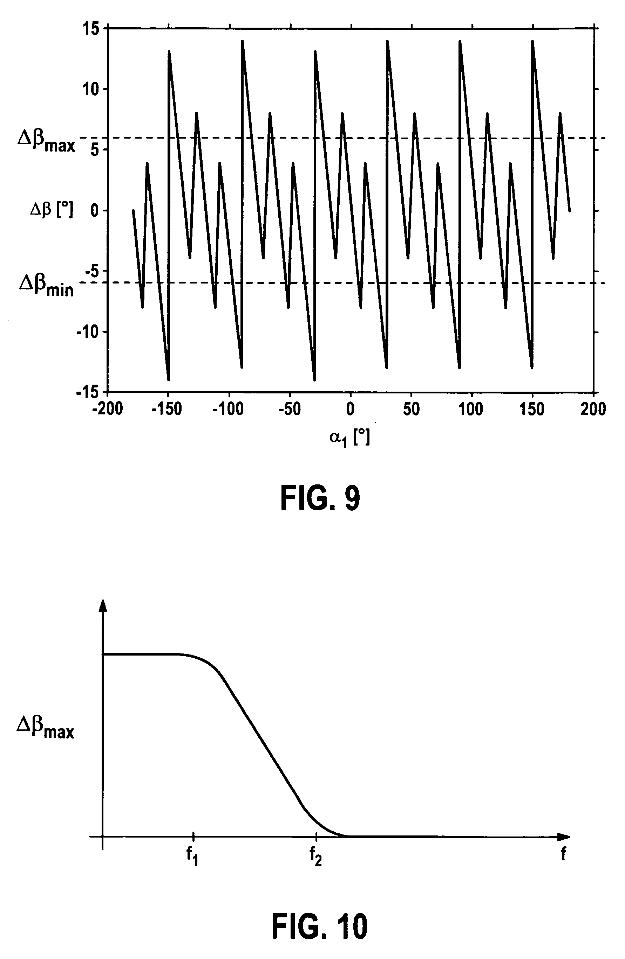

In Fig. 9 ist die Phasenwinkelabweichung delta_beta des Stromraumzeigers I2* von dem Sollstromraumzeiger I1* in Abhängigkeit des Sollphasenwinkels alpha1 schematisch dargestellt.

In Abhängigkeit des Sollphasenwinkels alpha1 wird die Abweichung delta_beta unterschiedlich eingestellt und schwankt zwischen -15 ° und + 15 °. Wie oben bereits erwähnt, ist ein von dem Sollphasenwinkel alpha1 abweichender Phasenwinkel alpha2 für bestimmte Sollphasenwinkel alpha1 nicht sinnvoll, da hier keine Entlastung eines Schalters S bzw. einer Freilaufdiode D erzielt wird, jedoch eine Mehrbelastung eines anderen Schalters S bzw. einer anderen Freilaufdiode bewirkt wird. Aus diesem Grunde ist die Abweichung delta_beta für diese Sollphasenwinkel alpha1gemäß Fig. 9 gleich 0, wohingegen für andere Sollphasenwinkel alpha1, wie z.B. -150°, -90°, -60°, +60°, +90°, +150° einer Abweichung delta_beta sinnvoll ist, um den am stärksten belasteten steuerbaren Schalter S zu entlasten. Aus diesem Grund entsteht ein Zickzack-Verlauf der Abweichung delta_beta in Abhängigkeit des Sollphasenwinkels alpha1, wie es in Fig. 9 dargestellt ist. Erfindungsgemäß wird die Abweichung delta_beta beschränkt, wie es durch die gestrichelten Linien bei + 6° und -6° angedeutet ist, die die Abweichungsgrenzen delta_beta _max, delta_beta_min bilden. Sofern eine Abweichung delta_beta für die entsprechenden Sollphasenwinkel alpha1 größer als die so definierte Abweichungsgrenze delta_beta _max, delta_beta _min möglich wäre, wird die Abweichung delta_beta entsprechend der Abweichungsgrenze delta_beta _max, delta_beta_min eingestellt. Dadurch kann die Gesamtbelastung des Wechselrichters 10 und die Verlustleistung des Wechselrichters 10 und der elektrischen Maschine 14 reduziert werden bzw. der Wirkungsgrad des Wechselrichters 10 und der elektrischen Maschine 14 erhöht werden.

In Fig. 10 ist die maximale Abweichung delta_beta _max in Abhängigkeit einer Rotationsfrequenz f des Sollstromraumzeigers I1* schematisch dargestellt. Dabei ist die maximale Abweichung delta_beta _max für geringe Frequenzen, die kleiner sind als eine erste vordefinierte Rotationsfrequenz f1, konstant. Sofern die Rotationsfrequenz f des Sollstromraumzeigers I1* die erste vordefinierte Rotationsfrequenz f1 überschreitet, wird die maximale Abweichung delta_beta _max in Abhängigkeit bzw. mit zunehmender Rotationsfrequenz f reduziert. Bei einer zweiten vordefinierten Rotationsfrequenz f2 des Sollstromraumzeigers I1* wird die maximale Abweichung delta_beta auf nahezu 0 reduziert. Ab der zweiten vordefinierten Rotationsfrequenz f2 ist die Rotationsfrequenz f so hoch, dass die steuerbaren Schalter S über einen so kurzen Zeitraum belastet werden, dass die thermische Belastung der Schalter S des Wechselrichters 10 gleich verteilt ist und eine Abweichung delta_beta des Phasenwinkels alpha2 von dem Sollphasenwinkel alpha1 keine Entlastung eines der Schalter S bewirken würde, sondern die Gesamtbelastung des Wechselrichters 10 erhöhen würde. Daher wird für Rotationsfrequenzen f größer als die zweite vordefinierte Rotationsfrequenz f2 auf 0 eingestellt. Zwischen der ersten vordefinierten Rotationsfrequenz f1 und der zweiten vordefinierten Rotationsfrequenz f2 wird die maximale Abweichung delta_beta linear in Abhängigkeit der Rotationsfrequenz f reduziert. Dadurch ist ein regelungstechnisch einfacher Übergang zwischen der Ansteuerung mit abweichendem Phasenwinkel und ohne abweichendem Phasenwinkel, also zwischen dem Frequenzbereich für f kleiner als f1 und dem Frequenzbereich für f größer als f2 möglich. Ferner können dadurch bei zunehmender Rotationsfrequenz f dynamische Effekte reduziert werden, die durch ein abruptes Umschalten zwischen der Ansteuerung mit Abweichung delta_beta und ohne Abweichung delta_beta vermieden werden.

Es versteht sich, dass die maximale Abweichung delta_beta _max, die in Fig. 10 dargestellt ist als Betrag anzusehen ist und sowohl für die obere Grenze delta_beta _max als auch für die untere Grenze delta_beta _min gilt.

Das vorliegende Verfahren wird vorzugsweise zum Ansteuern von elektrischen Maschinen verwendet, wobei die maximal mögliche Abweichung delta_beta _max abhängig ist von dem Typ der elektrischen Maschine. Die maximale Abweichung kann bis zu 30° betragen.

## Patentansprüche

1. Verfahren zum Ansteuern eines Wechselrichters (10) mittels Raumzeigermodulation, insbesondere zum Ansteuern einer elektrischen Maschine (14), wobei der Wechselrichter (10) eine Mehrzahl von steuerbaren Schaltern (S) aufweist und der dazu ausgebildet ist, einen mehrphasigen elektrischen Strom (IU, IV, IV) bereitzustellen, insbesondere um die elektrische Maschine (14) mehrphasig mit elektrischem Strom (IU, IV, IV) zu versorgen, wobei ein Sollstromraumzeiger (I1*) mit einem Sollphasenwinkel (alpha1) und einer Sollamplitude (I1) vorgegeben wird, wobei der Wechselrichter (10) derart angesteuert wird, dass eine Mehrzahl von unterschiedlichen aufeinanderfolgenden Schaltzuständen (V1-V7) der Schalter (S) eingerichtet wird, um den elektrischen Strom (IU, IV, IV) in Form eines Stromraumzeigers (I2*) bereitzustellen,

   **dadurch gekennzeichnet, dass**
   der Wechselrichter (10) derart angesteuert wird, dass der Stromraumzeiger (I2*) mit einem Phasenwinkel (alpha2) bereitgestellt wird, der sich von dem Sollphasenwinkel (alpha1) unterscheidet und wobei eine Abweichung (delta_beta) des Phasenwinkels (alpha2) von dem Sollphasenwinkel (alpha1) in Abhängigkeit einer Rotationsgeschwindigkeit (f) des Sollstromraumzeigers (I1*) begrenzt wird.

2. Verfahren nach Anspruch 1, wobei die Abweichung (delta_beta) mit zunehmender Rotationsgeschwindigkeit (f) reduziert wird.

3. Verfahren nach Anspruch 1 oder 2, wobei die Abweichung (delta_beta) in Abhängigkeit von dem Sollphasenwinkel (alpha1) des Stromraumzeigers (I1*) eingestellt wird.

4. Verfahren nach Anspruch 3, wobei die Abweichung ($\Delta\beta$) innerhalb eines Abweichungsbereiches (delta_beta _max, delta_beta _min) variiert wird und wobei der Abweichungsbereich (delta_beta_max, delta_beta_min) mit zunehmender Rotationsgeschwindigkeit (f) des Sollstromraumzeigers (I1*) reduziert wird.

5. Verfahren nach einem der Ansprüche 1 bis 4, wobei unterhalb einer vordefinierten Rotationsgeschwindigkeit (f1) der Phasenwinkel (alpha2) in Abhängigkeit eines vordefinierten Belastungssollwerts (m) der Schalter (S) eingestellt wird.

6. Verfahren nach Anspruch 5, wobei der Phasenwinkel (alpha2) und eine Amplitude (I2) des Stromraumzeigers (I2*) derart eingestellt werden, dass eine Leistungsabgabe identisch ist mit einer Leistungsabgabe entsprechend dem Sollphasenwinkel (alpha1) und der Sollamplitude (I1) des Sollstromraumzeigers (I1*).

7. Verfahren nach einem der Ansprüche 1 bis 6, wobei die maximale Abweichung (delta_beta _max) des Stromraumzeigers (I2*) von dem Sollstromraumzeiger (I1*) 30° Grad beträgt.

8. Verfahren nach einem der Ansprüche 4 bis 7, wobei der Abweichungsbereich (delta_beta _max, delta_beta _min) zwischen einer ersten vordefinierten Rotationsgeschwindigkeit (f1) und einer zweiten vordefinierten Rotationsgeschwindigkeit (f2) des Sollstromraumzeigers (I1*) linear reduziert wird.

9. Verfahren nach einem der Ansprüche 1 bis 8, wobei mittels des Wechselrichters (10) eine elektrische Maschine (14) angesteuert wird und der Sollstromzeiger (I1*) in Abhängigkeit des Rotorwinkels der elektrischen Maschine (14) bestimmt wird.

10. Verfahren nach Anspruch 9, wobei der Phasenwinkel (alpha2) und die Amplitude (I2) des Stromraumzeigers (I2*) unterhalb einer vordefinierten Rotationsgeschwindigkeit (f1) derart bestimmt werden, dass ein von der elektrischen Maschine (14) angegebenes Drehmoment (M) identisch ist mit dem Drehmoment (M), das mittels des Sollstromraumzeigers (I1*) abgegeben wird.

11. Vorrichtung (18) zum Ansteuern eines Wechselrichters (10), insbesondere zum Ansteuern einer elektrischen Maschine (14), wobei der Wechselrichter (10) eine Mehrzahl von steuerbaren Schaltern (S) aufweist, die dazu angeschlossen sind, einen mehrphasigen elektrischen Strom (IU, IV, IW) in Abhängigkeit eines Sollstromraumzeigers (I1*) mit einem Sollphasenwinkel (alpha1) und einer Sollamplitude (I1) bereitzustellen, insbesondere um die elektrische Maschine (14) mehrphasig zu bestromen, mit einem Steuergerät (18), das dazu ausgebildet ist, den Wechselrichter (10) derart anzusteuern, dass der Wechselrichter (10) eine Mehrzahl von aufeinanderfolgenden unterschiedlichen Schaltzuständen (V1-V7) der Schalter (S) annimmt, um den elektrischen Strom (IU, IV, IW) in Form eines Stromraumzeigers (I2*) bereitzustellen,
**dadurch gekennzeichnet, dass**
das Steuergerät (18) dazu ausgebildet ist, den Wechselrichter (10) derart anzusteuern, dass der Stromraumzeiger (I2*) mit einem Phasenwinkel ($\alpha$2) bereitgestellt wird, der sich von dem Sollphasenwinkel (alpha1) unterscheidet, und eine Abweichung (delta_beta) des Phasenwinkels (alpha2) von dem Sollphasenwinkel (alpha1) in Abhängigkeit einer Rotationsgeschwindigkeit (f) des Sollstromraumzeigers (I1*) begrenzt wird.

12. Kraftfahrzeugantriebsstrang mit wenigstens einer elektrischen Maschine (14) zum Bereitstellen von Antriebsleistung, einem Wechselrichter (10) zum Ansteuern der elektrischen Maschine (14) und mit einer Vorrichtung (18) zum Ansteuern des Wechselrichters (10) nach Anspruch 11.

**Claims**

1. Method for controlling an inverter (10) by means of space vector modulation, in particular for controlling an electrical machine (14), wherein the inverter (10) has a plurality of controllable switches (S) and is designed to provide a polyphase electric current (IU, IV, IV), in particular in order to supply the electrical machine (14) with electric current (IU, IV, IV) in a polyphase fashion, wherein a nominal current space vector (I1*) having a nominal phase angle (alpha1) and a nominal amplitude (I1) is predefined, wherein the inverter (10) is controlled such that a plurality of different consecutive switching states (V1-V7) of the switches (S) are set in order to provide the electric current (IU, IV, IV) in the form of a current space vector (I2*),
**characterized in that**
the inverter (10) is controlled such that the current space vector (I2*) is provided with a phase angle (alpha2) which is different from the nominal phase angle (alpha1) and wherein a deviation (delta_beta) of the phase angle (alpha2) from the nominal phase angle (alpha1) is limited as a function of a rotation speed (f) of the nominal current space vector (I1*).

2. Method according to Claim 1, wherein the deviation (delta_beta) is reduced with increasing rotation speed (f) .

3. Method according to Claim 1 or 2, wherein the deviation (delta_beta) is set as a function of the nominal phase angle (alphal1) of the current space vector (I1*).

4. Method according to Claim 3, wherein the deviation

($\Delta\beta$) is varied within a deviation range (delta_beta_max, delta_beta_min) and wherein the deviation range (delta_beta_max, delta_beta_min) is reduced with increasing rotation speed (f) of the nominal current space vector (II*).

5. Method according to any of Claims 1 to 4, wherein, below a predefined rotation speed (f1), the phase angle (alpha2) is set as a function of a predefined nominal loading value (m) of the switches (S).

6. Method according to Claim 5, wherein the phase angle (alpha2) and an amplitude (12) of the current space vector (I2*) are set such that a power output is identical to a power output corresponding to the nominal phase angle (alphal1) and the nominal amplitude (I1) of the nominal current space vector (I1*).

7. Method according to any of Claims 1 to 6, wherein the maximum deviation (delta_beta_max) of the current space vector (I2*) from the nominal current space vector (I1*) is 30° degrees.

8. Method according to any of Claims 4 to 7, wherein the deviation range (delta_beta_max, delta_beta_min) is reduced linearly between a first predefined rotation speed (f1) and a second predefined rotation speed (f2) of the nominal current space vector (I1*).

9. Method according to any of Claims 1 to 8, wherein an electrical machine (14) is controlled by means of the inverter (10) and the nominal current phasor (I1*) is determined as a function of the rotor angle of the electrical machine (14).

10. Method according to Claim 9, wherein the phase angle (alpha2) and the amplitude (12) of the current space vector (I2*) are determined below a predefined rotation speed (f1) such that a torque (M) denoted by the electrical machine (14) is identical to the torque (M) which is output by means of the nominal current space vector (I1*).

11. Device (18) for controlling an inverter (10), in particular for controlling an electrical machine (14), wherein the inverter (10) has a plurality of controllable switches (S) which are connected to provide a polyphase electric current (IU, IV, IW) as a function of a nominal current space vector (I1*) having a nominal phase angle (alphal1) and a nominal amplitude (I1), in particular to energize the electrical machine (14) in a polyphase fashion, having a control device (18) which is designed to control the inverter (10) such that the switches (S) of the inverter (10) assume a plurality of consecutive different switching states (V1-V7) in order to provide the electric current (IU, IV, IW) in the form of a current space vector (I2*),

**characterized in that**
the control device (18) is designed to control the inverter (10) such that the current space vector (I2*) is provided with a phase angle ($\alpha$2) which is different from the nominal phase angle (alphal1), and a deviation (delta_beta) of the phase angle (alpha2) from the nominal phase angle (alphal1) is limited as a function of a rotation speed (f) of the nominal current space vector (I1*).

12. Motor vehicle drivetrain having at least one electrical machine (14) for providing drive power, an inverter (10) for controlling the electrical machine (14) and having a device (18) for controlling the inverter (10) according to claim 11.

**Revendications**

1. Procédé d'excitation d'un onduleur (10) au moyen de la modulation du vecteur d'espace, notamment d'excitation d'une machine électrique (14), l'onduleur (10) possédant une pluralité de commutateurs (S) commandables et étant configuré pour fournir un courant électrique multiphasé (IU, IV, IV), notamment pour alimenter la machine électrique (14) en courant électrique (IU, IV, IV) sur plusieurs phases, un vecteur d'espace de courant de consigne (I1*) ayant un angle de phase de consigne (alpha1) et une amplitude de consigne (I1) étant prédéfini, l'onduleur(10) étant excité de telle sorte qu'une pluralité d'états de commutation (V1-V7) successifs différents des commutateurs (S) est établie afin de fournir le courant électrique (IU, IV, IV) sous la forme d'un vecteur d'espace de courant (I2*),
**caractérisé en ce que**
l'onduleur (10) est excité de telle sorte que le vecteur d'espace de courant (I2*) est délivré avec un angle de phase (alpha2), lequel est différent de l'angle de phase de consigne (alpha1), un écart (delta_bêta) entre l'angle de phase (alpha2) et l'angle de phase de consigne (alpha1) est limité en fonction d'une vitesse de rotation (f) du vecteur d'espace de courant de consigne (I1*).

2. Procédé selon la revendication 1, selon lequel l'écart (delta_bêta) est réduit à mesure que la vitesse de rotation (f) augmente.

3. Procédé selon la revendication 1 ou 2, selon lequel l'écart (delta_bêta) est réglé en fonction de l'angle de phase de consigne (alpha1) du vecteur d'espace de courant de consigne (I1*).

4. Procédé selon la revendication 3, selon lequel l'écart ($\Delta\beta$) varie à l'intérieur d'une plage d'écart (delta_bêta_max, delta_bêta_min) et la plage d'écart (delta_bêta_max, delta_bêta_min) est réduite'à mesure que la vitesse de rotation (f) du vecteur d'espace de courant de consigne (I1*) augmente.

5. Procédé selon l'une des revendications 1 à 4, selon lequel, au-dessous d'une vitesse de rotation (f1) prédéfinie, l'angle de phase (alpha2) est réglé en fonction d'une valeur de charge (m) prédéfinie du commutateur (S).

6. Procédé selon la revendication 5, selon lequel l'angle de phase (alpha2) et une amplitude (12) du vecteur d'espace de courant sont réglés de telle sorte qu'une puissance délivrée est identique à une puissance délivrée correspondant à l'angle de phase de consigne (alpha1) et à l'amplitude de consigne (I1) du vecteur d'espace de courant de consigne (I1*).

7. Procédé selon l'une des revendications 1 à 6, selon lequel l'écart maximum (delta_bêta_max) entre le vecteur d'espace de courant (I2*) et le vecteur d'espace de courant de consigne (I1*) est de 30° degrés.

8. Procédé selon l'une des revendications 4 à 7, selon lequel la plage d'écart (delta_bêta_max, delta_bêta_min) est réduite linéairement entre une première vitesse de rotation (f1) prédéfinie et une deuxième vitesse de rotation (f2) prédéfinie du vecteur d'espace de courant de consigne (I1*).

9. Procédé selon l'une des revendications 1 à 8, selon lequel une machine électrique (14) est excitée au moyen de l'onduleur (10) et le vecteur de courant de consigne (I1*) est déterminé en fonction de l'angle de rotor de la machine électrique (14).

10. Procédé selon la revendication 9, selon lequel l'angle de phase (alpha2) et l'amplitude (12) du vecteur d'espace de courant (I2*), au-dessous d'une vitesse de rotation (f1) prédéfinie, sont déterminés de telle sorte qu'un couple (M) indiqué par la machine électrique (14) est identique au couple (M) qui est délivré au moyen du vecteur d'espace de courant de consigne (I1*).

11. Dispositif (18) destiné à exciter un onduleur (10), notamment à exciter une machine électrique (14), l'onduleur (10) possédant une pluralité de commutateurs (S) commandables qui sont raccordés en vue de fournir un courant électrique multiphasé (IU, IV, IW) en fonction d'un vecteur d'espace de courant de consigne (I1*) ayant un angle de phase de consigne (alpha1) et une amplitude de consigne (I), notamment pour alimenter la machine électrique (14) sur plusieurs phases, comprenant un contrôleur (18) qui est configuré pour exciter l'onduleur (10) de telle sorte que l'onduleur (10) adopte une pluralité d'états de commutation (V1-V7) successifs différents des commutateurs (S) afin de fournir le courant électrique (IU, IV, IW) sous la forme d'un vecteur d'espace de courant (I2*),

**caractérisé en ce que**
le contrôleur (18) est configuré pour exciter l'onduleur (10) de telle sorte que le vecteur d'espace de courant (I2*) est délivré avec un angle de phase ($\alpha$2), lequel est différent de l'angle de phase de consigne (alpha1), et un écart (delta_bêta) entre l'angle de phase (alpha2) et l'angle de phase de consigne (alpha1) est limité en fonction d'une vitesse de rotation (f) du vecteur d'espace de courant de consigne (I1*).

12. Chaîne cinématique de véhicule automobile comprenant au moins une machine électrique (14) destinée à fournir de la puissance motrice, un onduleur (10) destiné à exciter la machine électrique (14) et comprenant un dispositif (18) destiné à exciter l'onduleur (10) selon la revendication 11.

**FIG. 1**

FIG. 2

FIG. 3

**FIG. 4**

FIG. 5

EP 2 865 094 B1

**FIG. 6**

**FIG. 7**

Phase V

$\cos \alpha - 240°$

$V_{Im}$

$I_1{}^*$

M

$\cos \alpha - 120°$

$\cos \alpha$

Phase U

Phase W

FIG. 8

**FIG. 9**

**FIG. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010000548 A2
- DE 10393516 T1
- US 5631819 A